# EUROPEAN PATENT SPECIFICATION

(11) **EP 1 081 102 B1**
(45) Date of publication and mention of the grant of the patent: **28.03.2007**
(21) Application number: 00117714.6
(22) Date of filing: 17.08.2000
(51) Int. Cl.: C02F 11/14, C04B 18/04, C04B 28/18, C04B 40/02, C02F 11/00

(54) **Method of treating silica-containing mud sludge**
Verfahren zur Behandlung von Kieselsäuren enthaltenden Schlamm
Procédé de traitement de boues contenant de la silice

(30) Priority: 19.08.1999 JP 23277199; 31.08.1999 JP 24494199; 11.01.2000 JP 2000002124
(43) Date of publication of application: 07.03.2001
(73) Proprietor: Kabushiki Kaisha Kobe Seiko Sho (Kobe Steel Ltd.), Kobe shi, Hyogo 651-0072 (JP)
(72) Inventor: Hasegawa, Masataka, Takasago Works Kobe Steel Ltd., Takasago-shi, Hyogo 676-8670 (JP); Tanaka, Takeshi, Takasago Works Kobe Steel Ltd., Takasago-shi, Hyogo 676-8670 (JP); Ida, Toru, Kobe Corp. Research Laboratories, Nishi-ku, Kobe-shi, Hyogo 651-2271 (JP); Kamada, Michihiro, Kobe Corp. Res. Laboratories, Nishi-ku, Kobe-shi, Hyogo 651-2271 (JP)
(74) Representative: TBK-Patent

(56) References cited:
- EP-A- 0 678 488
- WO-A-00/17114
- GB-A- 1 463 477
- GB-A- 1 534 727
- US-A- 4 941 772
- US-A- 5 434 333
- PATENT ABSTRACTS OF JAPAN vol. 1999, no. 04, 30 April 1999 (1999-04-30) & JP 11 019917 A (MITSUI ENG &SHIPBUILD CO LTD), 26 January 1999 (1999-01-26)

## Description

### BACKGROUND OF THE INVENTION

This invention concerns a method of treating mud sludge containing silica (SiO₂) and, more in particular, silica-containing by-products such as the sludge resulting from construction, from effluent water treatment of dredged mud, from effluent water treatment of crushing plants including gravel plants) and the fine powders resulting from crushing plants, and a method of producing solidification products of excellent strength and low water absorption, which are utilizable, for example, as fine aggregates for concrete and road base material of wide application use and of great demand, as well as a method of reducing industrial wastes. It also relates to a method of producing mud like raw material which can be utilized as base material and backfilling material from such silica-containing mud sludge.

Crushed stone or sand used for road and civil construction are produced in a crushing plant. Stone of about 1 m meter size obtained by blasting in quarries is charged to the crushing plant, crushed by crushers, and separated into classes of particle size at classifying steps. Crushing is usually repeated in order to obtain the products of size distribution in the standard specifications. The sand making facilities for producing fine aggregates for concrete with a particle size of 5 mm or less is installed in the downstream of the plant.

In the sand making facilities of the crushing plant, crushing products are washed with water to remove deposited mud, and fine particles with an aim of improving the quality of the products. Particularly, the content of such fine sand particles of 75 µm or less contained in the products is restricted for fine aggregates for concrete (crushed sand), so that crushed products under 5 mm of size are washed with water to remove such fine particles upon production of the fine aggregates. Effluent water from such washing process contains 5 to 10% by weight of mud and/or sludge having a particle size of about 75 µm or less, which is referred to as "effluent water". The effluent water is treated in an effluent water treatment process having the facilities dewatering machines such as filter presses and sedimentation tanks. The sludge settled in a thickener is dewatered to give mud cake, which is silica-containing wet mud sludge. Such mud cake formed by the treatment of effluent water is referred to as "effluent water cake". For example, the production of effluent water cake is usually about 10% by weight based on the production of the fine aggregates for concrete.

Since the mud cake is regarded as the industrial wastes, its utilization has been studied widely from the viewpoint of environmental protection. However, the conventional utilization method of mud cake is mixing with quick lime or cement to produce raw material such as backfilling material and banking material. Since the strength (uniaxial compression strength) of thus obtained products is as low as 10 kg/cm² or lower, the number of applicable use is very small, for example, civil engineering material of low strength for backfilling and/or banking. They are neither in continuous and great demand nor expected to be used in wide range of construction. Therefore, a new method should be developed to produce material of practical utilization from such mud sludge.

Then, fine powders (dry fine powders) which is also by-products will be explained. Sand production facilities of crushing plants sometimes include a dry classifier such as an air separator to separate the crushed products of 5 mm or less and to remove the particles of 75 µm or less for producing fine aggregates for concrete. In sand production facilities, such particles of 75 µm or less are mainly formed as by-products of the separation. When fine aggregates for concrete are produced, fine powder is formed by about 10% by weight based on the production of the fine aggregates. Further, fine powder is generally collected in the crushing plant to product the air pollution, which is regarded as the waste.

Although an application of fine powder to a component of high fluidity concrete was developed, the demand is also small. Furthermore, effluent water cake and fine powders are also formed as by-products in a so-called gravel plant which produces the crushed products from stones and rocks of rivers as starting material, and are not actually utilized as useful resources.

In addition, silica-containing sludge is also produced from the effluent water treatment of dredging and the treatment of construction. Such the effluent water is of high water content and contains soil, sand and fine particles formed upon dredging lakes, rivers and dams. Stones or sand of large, medium or small size is separated from the effluent water. Thus obtained effluent water is treated further to remove the fine particles to produce effluent water cake. The construction sludge is, as is well-known, formed during the civil and construction works such as continuous ground slurry wall method, slurry shield method and jet mixing method, and consists of various sizes of stones, sand, and fine particles with high water content.

Since the most of such sludge has not been utilized widely, water from dredging treatment or sludge resulting from construction are merely processed into mud cake (silica-containing mud sludge) for the reduction of volume, so that it is strongly demanded to develop a useful process for utilizing them and reducing the volume of waste sludge from the viewpoint of environmental protection.

US-A-4,941,772; US-A-5,434,333; GB-A-1 534 727 and GB-A-1 463 477 describe methods of treating substantially water-free dusts comprising silica as additive or binder in order to treat wastes of different industrial plants.

### SUMMARY OF THE INVENTION

In view of the above, this invention intends to provide a method capable of treating various kinds of silica-containing mud sludge and mud cake (silica-containing mud sludge), regarding silica-containing mud sludge such as sludge resulting from construction, from effluent water treatment of dredged mud, from effluent water treatment of crushing plants (including gravel plants) and fine powders formed in the crushing plants and capable of obtaining solidification products of excellent strength and low water absorption, which are utilizable of wide application uses and of great demand, for example, fine aggregates for concrete and road base material, as well as capable of reducing the volume of waste sludge and mud.

For attaining the foregoing object, this invention provides the following means. Hereinafter, the values of water content and the water absorption are expressed in "% by weight" which is simply referred to as "%".

This invention provides a method of treating silica-containing mud sludge comprising, a mixing step where the silica-containing mud sludge is mixed with calcium compound to form homogeneous mud-like raw material having a non-mixed ratio of 6% or less, and a hydrothermal solidification step where the mud-like raw material is treated under the hydrothermal conditions to obtain solidification products (the first method of treatment of silica-containing mud sludge).

Further, the present invention provides a method of treatment of silica-containing mud sludge comprising, a mixing step where the silica-containing mud sludge is mixed with calcium compound to form homogeneous mud-like raw material having a non-mixed ratio of 6% or less, a granulation step where the mud-like raw material is granulated, and a hydrothermal solidification step where the granulated mud-like raw material is treated under the hydrothermal conditions to obtain solidification products (the second method of treatment of silica-containing mud sludge).

Further, in accordance with this invention, it is preferred that a water content controlling step is combined with the mixing step to obtain the mud-like raw material with a water content of 5 to 35 wt% (the third method of treatment of silica-containing mud sludge).

In this invention, it is necessary that the silica-containing mud sludge is mixed homogeneously with the calcium compound in the mixing step to form the homogeneous mud-like raw material. It is desirable to conduct the mixing step so as to satisfy that the circle-equivalent diameter of each of portions of mud sludge which is not mixed with calcium compound (non-mixed portions) should be 2 mm or less in the cross section of a packed specimen of the mud-like raw material

The mixing step is conducted such that the non-mixed ratio is 6% or less. The non-mixed ratio is defined hereinafter as the ratio of the total area of each of the non-mixed portions to the cross sectional area excluding void portions on the cross section of the packed specimen of the mud-like raw material. In the mixing step, a high speed flowing mixer of backflow type can be utilized suitably.

Further, in accordance with this invention, the mixing step can also include a water content controlling step, which includes at least one of the facilities such as a drying machine, a sun drying the equipment, equipments for mixing fine powder (dry fine powder) of the water addition equipments.

Further, the waste heat generated from the hydrothermal solidification step can be used for the above drying equipment as a heat source. This invention also includes the method of producing the so-called "improved soil" from silica-containing mud sludge described above. The "improved soil" is generally produced by mixing the mud sludge with calcium compound such as lime or cement to increase its strength and to decrease water content. The "improved soil" in this invention has a uniform and homogeneous appearance wherein the circle equivalent diameter of non-mixed portion is 2 mm or less on the cross section of the packed specimen of the mud-like raw material.

Further, the "improved soil" is the mud-like raw material in which silica-containing sludge and calcium compound are mixed uniformly and homogeneously wherein the non-mixing ratio is 6% or less, the non-mixing ratio being defined as a ratio of the area of non-mixed portions to the total cross sectional area excluding void portions on the cross section of the packed specimen of the "improved soil".

For the method of treating the silica-containing mud sludge according to this invention as described above, the starting material can be chosen from the following silica-containing mud sludge, construction sludge, mud cake formed from the effluent water treatment of dredging facilities and crushing plants, and/or fine powders collected in crushing plants.

The first and the second methods of treatment described in this invention are applied to the silica-containing mud sludge which has the water content within an appropriate range and for which any equipment for water content control is not necessary. Therefore, the first or the second treatment method is conducted as that: calcium compound is at first mixed with the mud cake to prepare mud-like raw material (mixing step). The calcium compound can be chosen from calcium oxide (quick lime), calcium hydroxide (milk lime) and cement.

The mud-like raw material is granulated in the desired range of diameter prior to the hydrothermal solidification step for the second treatment method. The calcium compound is added to the mud cake so as to synthesize the calcium silicates such as tobermolite (5CaO - 6SiO₂ · 5H₂O) during the hydrothermal solidification step as described later. Since the atomic ratio of Ca to Si (Ca/Si) in tobermolite is 5/6, the amount of calcium compound added to the silica-containing mud sludge should be less than 5/6. An excess addition of calcium compound is superfluous and wasteful. Further, the water content of the mud-like raw material is preferably within the range from 5 to 35% as to be described later from the viewpoint of the granulating properties of the mud-like raw material. If the water content of the admixture, that is, mud-like raw material, satisfies the range described above, further control of water content of the starting material is not necessary.

In accordance with this invention, the mixing step has to be conducted so that both of the silica-containing mud sludge and the calcium compound are mixed homogeneously to satisfy the conditions of diameter and of non-mixed ratio as described above. One method of mixing to realize such conditions is to use a high speed mixer, though the stirring speed (the rotation speed of the agitation blade) can not be defined generally because it differs depending on the water content and the viscosity of the sludge to be treated. However, an example of mixing conditions is as follows, as is described in "Preferred Embodiments of the Invention", the rotation speed of the agitation blade should be 4 to 5 times faster than the conventional one that has been used for producing the "improved soil" from the construction sludge or dredged soil with an aim of reducing the water content of the sludge, lowering the fluidity of the sludge and improving the granulation properties of the sludge. Referring more specifically, a high speed mixer of vertical blade type with a rotation speed from 1250 to 3000 rpm can be used for this invention. The preferable example of the type is a mixture of the rotating vessel type which has vessel rotating horizontally and is equipped with a high speed mixing blade of which the vertical axis rotates in countercurrent direction compared to the rotation direction of the vessel. And the example of mixer which is adaptable to this invention is the spiral type of which the blades rotates at 200 to 500 rpm and of which the blade axis revolute around the center of the vessel at a speed of about 1/2 of the rotation speed of blade.

A preferred degree of uniform mixing is such that a circle-equivalent diameter of non-mixed portions is 2 mm or less in the cross section of the packed specimen of the mud-like raw material obtained by mixing silica-containing mud sludge and calcium compound. An example of preparation of the packed specimen for the mud-like raw material is based on the standards of The Soil Engineering Society, that is, the mud-like raw material is fed into a mold of 50 mm diameter x 100 mm length, and compacted with a compacting weight for several times. The compacted specimen is taken out of the mold and sliced in the longitudinal direction to four pieces to obtain the cut surfaces on which the non-mixed portions are to be observed. The number and the area of the non-mixed portions are measured for each of the above cut surfaces and summed up. The diameter Di of each of the non-mixed portions is calculated from its area assuming that each shape is circular. The areas of void portions which are formed by fluctuation of the compaction procedure are excluded from the calculation.

Hydrothermal solidification products of high strength and of high quality can be obtained from the mud-like raw material which does not include the non-mixed portions with a diameter Di larger than 2 mm. On the other hand, under the conditions for mixing step in which Di exceeds 2 mm, the resultant hydrothermal solidification products show low strength and low quality.

Further, in this invention, the degree of the uniform mixing of the mud-like raw material obtained by mixing the mud cake and the calcium compound can be represented by the non-mixed ratio. The non-mixed ratio is the ratio of the total area of the non-mixed portions observed on the cut surface of the packed specimen of the mud-like raw material prepared as above, regarding that the area of non-mixed portions Sb should be summation of the non-mixed portion with a circle-equivalent diameter Di larger than 0.5 mm. The non-mixed ratio is calculated as 100 x Sb/Sa [%], where Sa is the total area of the cut surface, excluding the void area. The ratio of 100 x Sb/Sa is calculated for each of the cut surface prepared as above. Thus obtained three mixed ratios are averaged and defined as the non-mixed ratio for the packed specimen. In the mixing step of this invention, the mixing conditions are preferably selected such that the non-mixed ratio should be 6% or less. The mud-like raw material with a non-mixed ratio of 6% or less will give the hydrothermal solidification products of high strength and high quality. Mixing step is conducted more preferably under the mixing conditions at the non-mixed ratio of 3% or less. It is preferred that the non-mixed portion is defined as a portion having the circle-equivalent diameter Di of 0.5 mm or more, because those having the circle-equivalent diameter Di of less than 0.5 mm scarcely give effects on the quality of the hydrothermal solidification products.

Further, the improved property of the mud-like raw material achieved by this invention that the mud-like raw material mixed uniformly neither fluidized nor re-slurrified again even if wetted with rain or water, and can be utilized as the road base material and backfilling material. That is, the mud-like raw material of which the circle-equivalent diameter Di for each of non-mixed portions is 2 mm or less can be utilized as the road base material and the backfilling material not suffering from fluidization or re-slurrification without applying hydrothermal treatment. Further, the mud-like raw material with the diameter of less than 0.5 mm can be utilized more suitably to this purpose since the re-slurrification ratio to be described later can be reduced to 5% or lower. In the same manner, if the mud-like raw material is prepared so as to have the non-mixed ratio of 6% or less the re-slurrification ratio is 10% or less and it can be used suitably as the road base material and the backfilling material. Furthermore, the mud-like raw material with the non-mixed ratio of 3% or less has the re-slurrification ratio of 5% or less, and can be utilized more suitably as the road base material and the backfilling material. When the mud-like raw material is utilized as the road base material and the backfilling material, it is preferred that the material is cured before use for promoting the reaction between the sludge and the calcium compound such as quick lime. The curing time can not generally be determined since it varies depending on the properties of the sludge, but it is preferably cured for about one hour.

In the second treatment method, a granulation step is located before hydrothermal solidification step. The conditions of granulation and the type of granulator differ depending on the water content and granulating properties of the sludge to be treated. The mud-like raw material is granulated in this step and then subjected to the hydrothermal treatment. A high speed mixer equipped with the horizontal blade is one of the preferable granulator when it is operated at about 500 to 800 rpm of blade rotation during granulation, then fine granulation products with enhanced compaction and reduced void ratio can be obtained.

Further, in this invention, when a mixer of variable speed rotation is used, the mixing step and the granulation step can be conducted without interruption by changing the rotation speed of the blade. A set of a high speed mixer and a low speed glanulator can also be used for this method of treatment.

Further, block-shaped molding products can be obtained by locating a press-molding step before the hydrothermal step thereby the block of high strength can be obtained from the hydrothermal treatment of the mud-like raw material pressed in a mold.

Thus obtained mud-like raw material, the granulated mud-like raw material, or the mud-like raw material pressed in a mold is treated in an autoclave under the hydrothermal condition (hydrothermal solidification step). SiO₂ and CaO in the mud-like raw material react to form calcium silicates under the hydrothermal conditions. As a result, the fine particles in the starting sludge bond to each other to form the solidification products of small void ratio. It is preferred to operate the hydrothermal treatment at about 130 to 300°C in order to synthesize tobermolite, which is of relatively high strength among the calcium silicate crystals. Therefore, the conditions for the hydrothermal treatment are preferably 130 to 300°C of reaction temperature (autoclave temperature) with the team of saturated pressure and 1 to 24 hours of reaction time. Typical conditions are 180°C of temperature and 5 hours of time. The reaction temperature range in which the crystal growth of tobermolite can be promoted effectively in the temperature range from 130 to 300°C, therefore, higher temperature accelerates the reaction rate in this temperature range and shortens the reaction time with respect to the products of the similar properties and quality.

The third method of treatment of silica-containing mud sludge according to this invention includes the step of controlling the water content of the sludge when its water content is not appropriate for the mixing step, the granulating step or the hydrothermal treatment. The difference of this method from the first or the second treatment methods is that the control step of water content is included in this method, however, other step such as the granulating step or the hydrothermal solidification step are common for these three methods.

If the water content of the mud-like raw material is more than 35%, the mud-like raw material is too soft and weak to granulate, so that the hydrothermal solidification products do not have an excellent strength. On the other hand, if the water content is less than 5%, the compaction of the mud-like raw material is low resulting in the low strength of the hydrothermal solidification products, failing to obtain solidification products. Thus obtained products can not be utilized, for example, as fine aggregates for concrete or road base material which have a wide range of application use and are in great demand.

Accordingly, if the water content of the mud like raw material is out of the range of 5 to 35 %, the water content of the silica-containing mud sludge should be adjusted in the water content controlling/mixing step so as to satisfy the range. The water content is controlled by at least one of (a) a dewatering step of controlling the water content by a dewatering equipment, (b) a drying step of controlling the water content by a drier, (c) a water content adsorption step of controlling the water content by the addition of fine powders (fine powder addition step), (d) a sun drying step of controlling the water content by sun drying and (e) a water addition step of controlling the water content with addition of water.

This method the above (c) addition of fine powder provides a merit capable of saving the cost for controlling the water content of the silica-containing sludge by utilizing the fine powder, if it is produced in the same crushing plant. The water content controlling steps (a) - (e) may be properly selected depending on the water content of the silica-containing mud sludge and the facility used in the crushing plant. In addition, the sequence of conducting the water content control before or after the addition of the calcium product is determined properly. The mud-like raw material of which the water content is controlled within the predetermined range is thus prepared and, subsequently, applied with the same granulation step (only in the first treating method) and hydrothermal solidification step as in the first and the second treating methods.

According to the third method of treating the silica-containing mud sludge of this invention, solidification products of excellent strength and low water absorption having a specific gravity of 1.5 or more and a water absorption of 25% or less can be obtained by treating the silica-containing sludge, and the solidification products can be utilized as construction/civil engineering material such as fine aggregates for concrete and road base material which are in continuous great demand, and waste can be reduced.

### BRIEF DESCRIPTION OF THE DRAWINGS

FIG. 1 is a flow chart showing an embodiment for the first method of treating silica-containing mud sludge according to this invention;
FIG. 2 is a flow chart showing an embodiment for a second method of treating silica-containing mud sludge according to this invention;
FIG. 3 is a flow chart showing another embodiment for the second method of treating silica-containing mud sludge according to this invention;
FIG. 4 is a flow chart showing a further embodiment for the second method of treating silica-containing mud sludge according to this invention;
FIG. 5 is a flow chart showing a further embodiment for the second method of treating silica-containing mud sludge according to this invention;
FIG. 6 is a flow chart showing a further embodiment for the second method of treating silica-containing mud sludge according to this invention;
FIG. 7 is a flow chart for explaining an embodiment for the first method of utilizing crushing by-products of this invention;
FIG. 8 is a flow chart for explaining another embodiment for the first method of utilizing crushing by-products of this invention;
FIG. 9 is a flow chart for explaining an embodiment for the second method of utilizing crushing by-products of this invention;
FIG. 10 is a flow chart for explaining an embodiment for the third method of utilizing crushing by-products of this invention;
FIG. 11 is a view showing a schematic constitution of a high speed mixer of backflow type;
FIG. 12 is a diagram showing a relationship between the strength of the solidification products and the addition amount of the calcium compound in Example 1 and Example 2;
FIG. 13 is a diagram showing a relationship between the strength of the solidification products and the water content of the mud-like raw material;
FIG. 14 is a flow chart showing procedures for a method of manufacturing a mud-like raw material;
FIG. 15 is a flow chart showing another procedures for a method of manufacturing mud-like raw material; and
FIG. 16 is a graph showing an example of a relationship between the non-mixed ratio and the re-slurrification ratio.

### PREFERRED EMBODIMENTS OF THE INVENTION

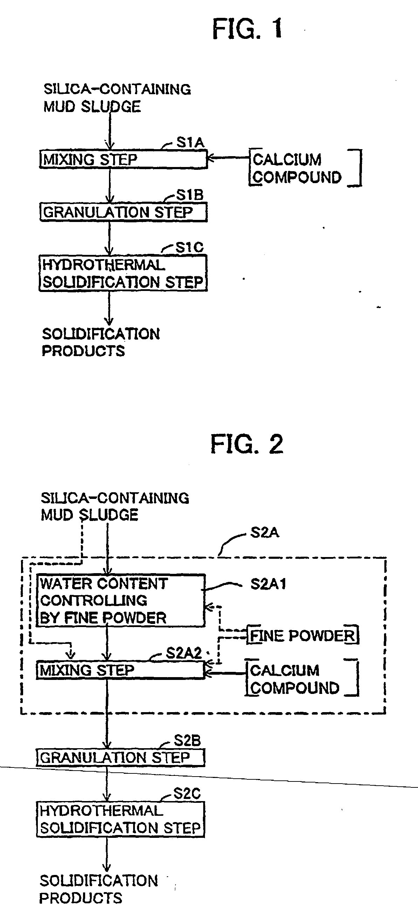

Preferred embodiments of this invention will be explained with reference to the drawings. FIG. 1 is a flow chart showing an embodiment of the second method of treating silica-containing mud sludge according to this invention.

The second treatment method according to this invention was practiced in accordance with the steps shown in FIG. 1. The silica-containing mud sludge as the object to be treated includes, as described previously, mud cake formed by a thickening/dewatering treatment for either one of the sludge resulted from construction, the effluent water cake resulted from dredged mud treatment and from crushing plants or the mud cake formed in the water fine powder section of the crushing plants. If these mud cake supplied has such a water content that satisfies a range from 5 to 35% after the calcium compound, it is not necessary to control its water content. In this example, the silica-containing mud sludge to be treated was mud cake formed in the effluent water treatment of the crushing plants (effluent water cake).

Then, as shown in FIG. 1, the calcium compound is mixed to the mud cake to form a mud-like raw material (mixing step S1A). In this example, the fine powder of calcium oxide, as the calcium compound was added and mixed such that the Ca and Si weight ratio (Ca/Si) was 1/4. In this example, a high speed mixer of vertical blade type described above was used for mixing, and the water content of the mud-like raw material was about 25%.

Then, the mud-like raw material was granulated to obtain granulation products (granulation step S1B). The high speed mixer of vertical blade type was also used for the granulation. That is, mixing and granulation were conducted by the identical high speed mixer. In this embodiment, the number of rotation of the mixer blade vanes is set within a range of 1300 to 2500 rpm during mixing and was set within a range from 400 to 800 rpm during granulation. The granulation products prepared under the operation conditions was of particle size (diameter) ranging from about 1 to 10 mm and finely compacted so that the particles in the grains was bounded strongly to each other and the voids inside grains became small.

Then, the granulation products were solidified by hydrothermal reaction using a reaction vessel (hydrothermal solidification step S1C). The conditions for the hydrothermal treatment were 180°C of reaction temperature with the steam of saturated pressure and 5 hours of reaction time. As a result, SiO₂ and CaO in the granulation product reacted to form tobermolite and to produce solidification products in which particles were firmly bonded to each other and had less void ratio, the solidification products had a specific gravity of 1.5 or more (1.50 - 1.95) and a water absorption of 25% or less (10.0 to 24.4%).

When thus obtained artificial aggregates were mixed with the fine aggregates produced from the crushed sand by 5 %, for example, the mixture satisfied JIS (Japan Industrial Standard) having a specific gravity more than 2.5 and the water absorption less than 3 % (JIS A5005/1995) and can be used as the fine aggregates for concrete. Further, the granular solidification products can be used for the road base material and the backfilling material.

FIG. 2 is a flow chart showing an embodiment of the third treatment method of silica-containing mud-sludge according to this invention. The third method of treating silica-containing mud sludge is applied when the supplied silica-containing mud sludge (mud cake) does not have an appropriate water content and the water content has to be controlled upon preparation of the mud-like raw material.

In FIG. 2, the silica-containing mud sludge was formed by the effluent water treatment of a crushing plant (effluent water cake). Since the water content in the supplied sludge was too high, the fine powders obtained from the crushing plant was added to the sludge to control the water content (water absorption step S2A1). In this case, the fine powder was added so as to control the water content of the mud-like raw material to be 5 to 35 % taking into account the addition of calcium compounds in the next step.

Then, thus obtained mud cake was mixed with calcium compound to prepare mud-like raw material (mixing step S2A2). In this example, the fine powder of calcium oxide was mixed such that the Ca and Si weight ratio (Ca/Si) was 1/4 in the mud-like raw material and the water content of the obtained mud-like raw material was about 25%. A high speed mixer of vertical blade type was used for mixing. As a matter of fact, as shown by a dotted line in FIG. 2, the sludge, the fine powders and the calcium oxide can be mixed all together to prepare the mud-like raw material. The water content controlling steps in this example consisted of S2A1 and S2A2 to prepare the mud-like raw material with the water content ranging from 5 to 35%.

Then, granulation products were obtained from the mud-like raw material using a high speed mixer of vertical blade type (granulation step S2B). That is, one identical high speed mixer of vertical blade type was used for both mixing and granulation under the conditions of rotation speed of 1300 to 2500 rpm during mixing and 400 to 800 rpm during granulation. Finely compacted granulation products of small void ratio with a diameter of about 1 to 10 mm were obtained under the above conditions.

Then, the granulation products were solidified by hydrothermal reaction in a reaction vessel (hydrothermal solidification step S2C). The conditions for the hydrothermal treatment were 180° C of reaction temperature with the steam of saturated pressure and 5 hours of reaction time. As a result, the tobermolite formed from SiO₂ and CaO in the granulation products bonded the particles in mud-like raw material to produce solidification products of small void ratio which had a specific gravity of 1.5 or higher and a water absorption of 25% or lower. Thus obtained granular solidification products can be used as fine aggregates for concrete by pulverization and classification or can be used as road base material.

A sun drying step can be adopted in S2A1 water content controlling step which is described above.

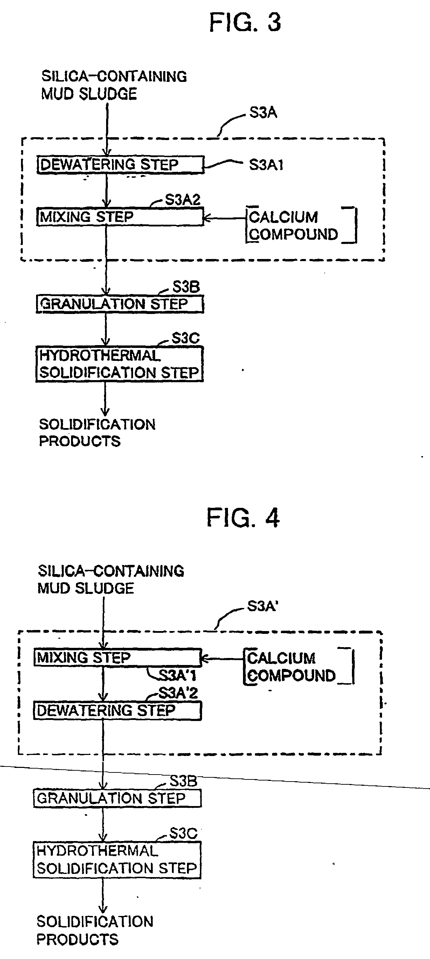

FIG. 3 is a flow chart showing another embodiment of the third method of treatment of silica-containing mud sludge according to this invention.

In FIG. 3, the silica-containing mud-sludge is, for example, mud cake formed in the effluent water treatment of the crushing plant (effluent water cake). When the water content of the mud cake is excessively high, it is at first dewatered by dewatering equipment (dewatering step S3A1). The conditions of such dewatering equipment should be adjusted so as to control the water content taking into account the effect of the water absorption by the calcium compound added in the next mixing step S3A2. Thus, the mud-like raw material to be treated in the next hydrothermal solidification step should have the water content between 5 to 35%. The dewatering equipment to be used in S3A1 step is, for example, a filter press, a belt press or a dryer.

One of these dewatering equipments or a combination of them can be used for the step S3A1. In the example, fine powder of calcium oxide was mixed using a high speed mixer of vertical blade type such that the Ca and Si weight ratio (Ca/Si) in the mud-like raw material was 1/4, and the water content of the resultant mud-like raw material was about 25%. The dewatering step S3A1 and the mixing step S3A2 constitute a water content controlling/mixing step S3A for obtaining the mud-like material having the water content within a range from 5 to 35%.

Then, the mud-like raw material was granulated by using a high speed mixer of vertical blade type (granulation step S3B) to form granulation products. In the example, mixing and granulation were conducted by one identical high speed mixer of vertical blade type as step S3B, the rotation speed of the mixer blade was set within a range from 1300 to 2500 rpm during mixing and 400 to 800 rpm during granulation. The granulation products with a particle size (diameter) ranging from 1 to 10 mm were prepared under the operation conditions described above. Thus obtained granulation products were finely compacted and of small void ratio.

Then, the granulation products were solidified by hydrothermal reaction in a reaction vessel (hydrothermal solidification step S3C). The conditions for the hydrothermal treatment are 180°C of reaction temperature with the steam of saturated pressure and 5 hours of reaction time. Then, SiO₂ and CaO in the granulation products reacted to form tobermolite resulting in producing the solidification products with less void ratio in which particles are bonded strongly to each other. The solidification products had the specific gravity of 1.5 or more and the water absorption of 25% or less. Thus obtained granular solidification products can be used as the fine aggregates for concrete by pulverization and classification or can be used as construction material and for road base material.

FIG. 4 is a flow chart showing another embodiment of the third method of treatment of silica-containing mud-sludge according to this invention. Since the treatment method is almost same as that shown in FIG. 3 except for the sequence of the mixing step and the dewatering step. The following description for FIG. 4 explains only the steps which are different from those in FIG. 3.

At first, the calcium compound is mixed with the silica-containing mud sludge from a crushing plant (mixing step S3A'1). The calcium oxide powder was added such that the weight ratio Ca/Si in the mud-like raw material after the dewatering treatment to be described later is 1/4. A high speed mixer of vertical blade type was used for mixing. Since thus obtained mixture contained excessive water content as the mud-like raw material, it was dewatered by a dewatering equipment (dewatering step S3A'2) so as to have a water content of about 25%.

The mixing step S3A'1 and the dewatering step S3A'2 constitute a water content controlling/mixing step S3A' which produce the mud-like raw material of a water content within the range from 5 to 35%. The dewatering step S3A'2 is constituted by one of the dewatering equipments such as filter press, belt press or dryer or the combination of them. Then the next granulation step S3B is conducted by a high speed mixer of vertical blade type in the same manner as shown in FIG. 3, and then a hydrothermal solidification step S3C was applied to obtain granular solidification products of excellent strength and low water absorption below 25% having a specific gravity of 1.5 or more. Thus obtained granular solidification products can be used as the fine aggregates for concrete by pulverization and classification or can be used as construction material and road base material.

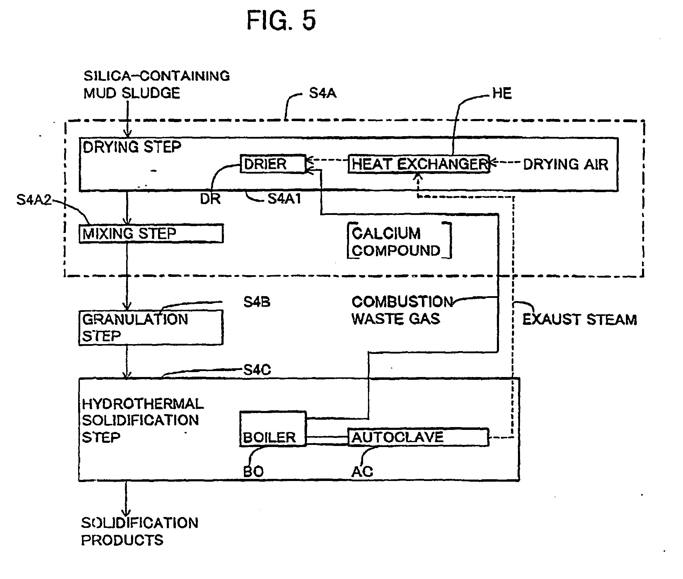

FIG. 5 is a flow chart showing another embodiment of the third method of treatment silica-containing mud sludge according to this invention.

In FIG. 5, the silica-containing mud-sludge is, for example, mud cake formed by the effluent water treatment in crushing plant (effluent water cake). Since the water content of the thus obtained mud cake was excessively high, the water content of the mud cake was at first controlled by a drier DR (drying step S4A1). In this case, drying conditions for DR should be adjusted taking into account the reduction of water content in the next step of mixing with the calcium compound. Thus obtained mud-like raw material should have the water content from 5 to 35% after the mixing step S4A2.

The drying step S4A1 described above utilizes the waste heat from the hydrothermal solidification step S4C for drying the mud cake. That is, the dryer DR utilizes the waste heat of the combustion gas exhausted from the boiler BO which generates high temperature steam for heating up the reaction vessel of hydrothermal solidification. The gas is introduced to the dryer DR where the mud cake is heated and its water content is adjusted to the desired value. In this case, a stirring type drier and a drum drier can be used as the drier DR, for example. Instead of such a dryer heating system using the exhaust gas, a heat exchanger system can be adapted for DR which utilizes the high temperature steam generated in the boiler BO or the low temperature waste steam exhausted from the autoclave AC to heat up the drying air using an air/steam heat exchanger HE. Thus obtained hot air is introduced to the dryer DR to adjust the water content of the mud cake.

Then the mud cake was mixed with the calcium compound to form the mud-like raw material (mixing step S4A2). In this embodiment, the fine powder of calcium oxide was mixed with the mud cake using high speed mixer of vertical blade type to form the mud-like raw material with the weight ratio of Ca/ Si = 1/4, and with the water content 25%. The drying step S4A1 and the mixing step S4A2 constitute a water content controlling/mixing step S4A for obtaining the mud-like raw material having a water content within a range from 5 to 35%. The water content controlling/mixing step S4A can also include a combination of the dewatering equipment and the drying equipment.

Then, the mud-like raw material was granulated by using a high speed mixer of vertical blade type (granulation step S4B) to form granulation products. In the step S3B, mixing and granulation were conducted by one identical mixer high speed of vertical blade type. The rotation speed of the mixer blade was set within a range from 1300 to 2500 rpm during mixing and 400 to 800 rpm during granulation. The granulation products with a particle size (diameter) ranging from 1 to 10 mm were prepared under the operation conditions described above. Thus obtained granulation products were finely compacted and of small void ratio.

Then, the granulation products were solidified by hydrothermal reaction in a reaction vessel (hydrothermal solidification step S4C). The conditions for the hydrothermal treatment were 180°C of reaction temperature with the steam of saturated pressure of and 5 hours of reaction time. Then, SiO₂ and CaO in the granulation products reacted to form tobermolite resulting in producing the solidification products with less void ratio in which particles were bonded strongly to each other. The solidification products had the specific gravity of 1.5 or more and the water absorption of 25% or less. Thus obtained granular solidification products can be used as the fine aggregates for concrete by pulverization and classification or can be used as construction material and for road base material.

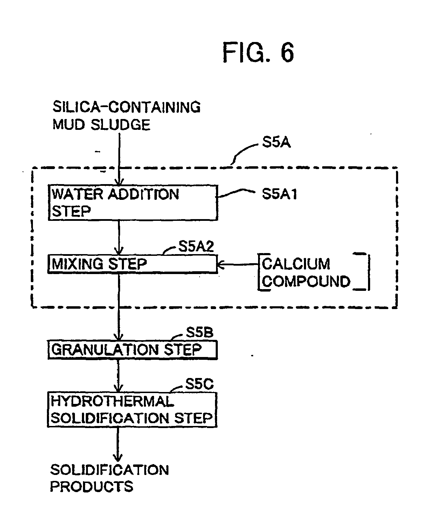

FIG. 6 is a flow chart showing another embodiment of the third method of treatment of silica-containing mud-sludge according to this invention.

In FIG. 6, the silica-containing mud sludge is, for example, mud cake comprising fine powders, for example, resulting from a crushing plant. Since the water content of the supplied mud cake was excessively low, the water content was at first controlled by addition of water (water addition step S5A1). In this case, the water content was controlled taking into account effect of the water absorption by the calcium compound in the mixing step S5A2 so as to adjust the water content of the mud-like raw material within a range from 5 to 35%.

In the example described above, fine powder of calcium oxide was mixed using a high speed mixer of vertical blade type such that the Ca and Si weight ratio (Ca/Si) in the mud-like raw material was 1/4, and the water content of the resultant mud-like raw material was about 25%. The water addition step S5A1 and the mixing step S5A2 constitute a water content controlling/mixing step S5A for obtaining the mud-like raw material having the water content within a range from 5 to 35%. As a matter of fact, in the water content controlling/mixing step S5A, the mud cake, the water and the calcium compound may be mixed together to prepare the mud-like raw material.

Then, the mud-like raw material was granulated by using a high speed mixer of vertical blade type (granulation step S5B) to form granulation product. In the step S5B, mixing and granulation were conducted by one identical high speed mixer of vertical blade type, the rotation speed of the mixer blade was set within a range from 1300 to 2500 rpm during mixing and 400 to 800 rpm during granulation. The granulation products with a particle size (diameter) ranging from 1 to 10 mm were prepared under the operation conditions described above. Thus obtained granular granulation products were finely compacted and of small void ratio.

Then, the granulation products are solidified by hydrothermal reaction in a reaction vessel (hydrothermal solidification step S5C). The conditions for the hydrothermal treatment were 180°C of reaction temperature of and 5 hours of reaction time. Then, SiO₂ and CaO in the granulation products reacted to form tobermolite resulting in producing the solidification products with less void ratio in which particles are combined strongly to each other. The solidification products had the specific gravity of 1.5 or more and the water absorption of 25% or less. Thus obtained granular solidification products can be used as the fine aggregates for concrete by pulverization and classification or can be used as construction materials and for road base material.

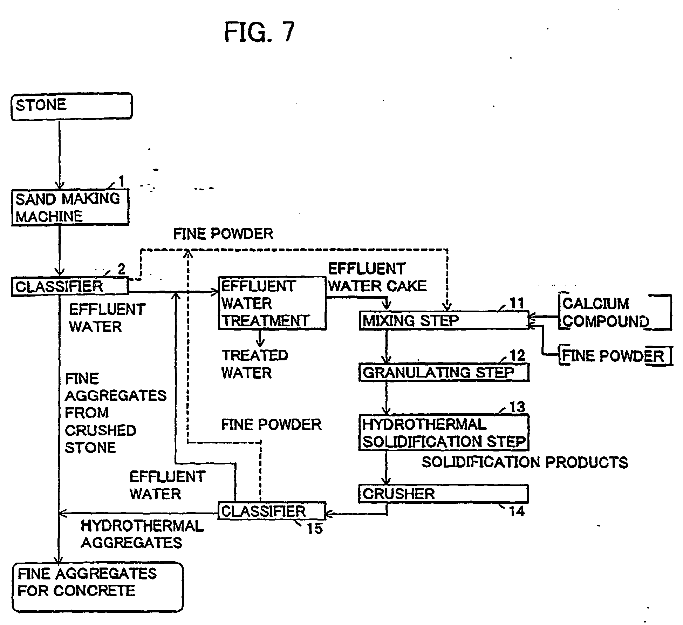

FIG. 7 is a flow chart for explaining an embodiment of the first method of utilizing crushing by-products according to this invention.

In FIG. 7, production of fine aggregates for concrete by sand production equipment in a crushing plant is at first explained as follows. The raw material (stones) of a particle size of about 40 to 20 mm was pulverized by a sand making machine (pulverizer) 1, then classified by a classifier 2 to a particle size of 5 mm or less. Thus obtained products are expressed as the fine aggregates from crushed stone in FIG. 7. A rod mill or an impact mill can be used for the sand making machine 1. An air separator or a screw classifier can be used for the classifier 2.

Then, the artificial fine aggregates for concretes were produced as follows. Starting materials was the effluent water cake and the fine powder.

As described above, the effluent water from sand washer after the classification by the classifier 2 was subjected to the effluent water treatment step, where the mud and the fine particles in water were concentrated in a thickener and dewatered by a dewatering equipment such as filter press to form effluent water cake. Thus obtained effluent water cake is mixed with fine powder of calcium oxide to form the mud-like raw material (mixing step 11). A high speed mixer of vertical blade type was used for mixing as described above. The fine powder of calcium oxide was added so that the weight ratio of Ca/Si of the mud-like raw material is 5/6 or less and 1/4 in this example. In this embodiment, the water content of the mud-like raw material was about 10% after mixing the calcium oxide, which satisfies the specified range of 5 to 35%, so that further control of the water content was not necessary. If the water content is out of the range as described above, the water content may be controlled by properly selecting the way of the water content control (a) - (e) for the effluent water cake described above. In this case, if the water content of the effluent water cake is excessive, it should be controlled by adding fine powder.

Then, the mud-like raw material was granulated by using a high speed mixer of vertical blade type (granulation step 12) to form granulation product. In the step 12, mixing and granulation were conducted by one identical high speed mixer of vertical blade type, the rotation speed of the mixer blade was set within a range from 1300 to 2500 rpm during mixing and 400 to 800 rpm during granulation. The granulation products with a particle size (diameter) ranging from 1 to 10 mm are prepared under the operation conditions described above. Thus obtained granular granulation products were finely compacted and of small void ratio.

Then, the granulation products were solidified by hydrothermal reaction in a reaction vessel (hydrothermal solidification step 13). The conditions for the hydrothermal treatment were 180°C of reaction temperature with the steam of saturated pressure of and 5 hours of reaction time. Then, SiO₂ and CaO in the granulation products reacted to form tobermolite resulting in producing the solidification products with less void ratio in which particles were combined strongly to each other. The solidification products have the specific gravity of 1.5 or more and the water absorption of 25% or less.

Thus obtained granular solidification products were pulverized by a pulverizer 14, and the pulverization products were classified by a classifier 15 to produce fine artificial aggregates with a particle size of 5 mm or less. As the classifier 14, a rod mill or an impact mill can be used and a sand making machine 1 may also be used if it is available in view of production. The classifier 15 produced the effluent water, however, it could be treated by the effluent water treatment again.

Thus produced fine artificial aggregates were blended with the fine aggregates from crushed stone produced by the sand making machine 1 at a weight ratio of fine natural aggregate from crushed stone: fine artificial aggregates = about 20:1 to obtain fine aggregates for concrete capable of satisfying the JIS.

The above explanations refers to the case using the effluent water cake as the starting material, however fine powder can also be used as the starting material as shown in FIG. 7 to produce the fine aggregates for concrete capable of satisfying the JIS.

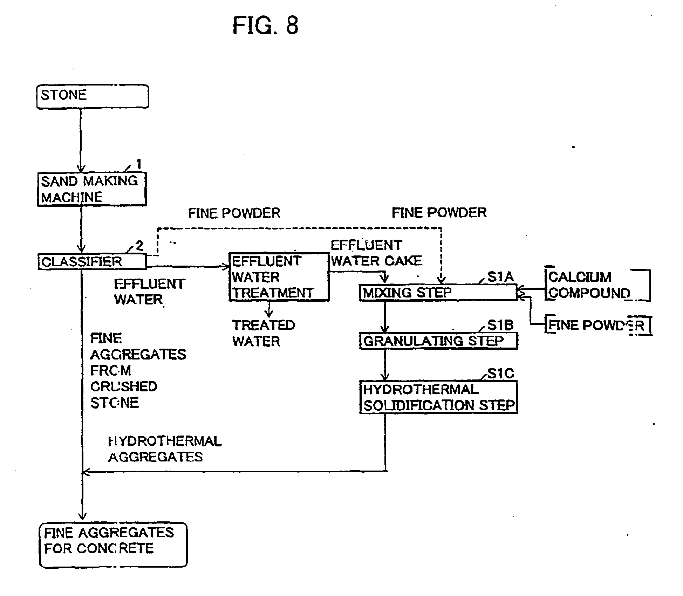

FIG. 8 is a flow chart showing another embodiment of the first method of utilizing crushing by-products according to this invention. Since the constitutions are almost same as those of the embodiment shown in FIG. 7 except that the obtained solidification products are used for the fine artificial aggregates without pulverization and classification, those portions in common with the embodiment shown in FIG. 7 carry the same reference numerals with no particular explanations, and explanations will be made only to the different aspects.

That is, as shown in FIG. 8, granular solidification products with a particle size of 5 mm or less were obtained starting from the effluent water cake or fine powder by way of a mixing step 11, a granulation step 12 and a hydrothermal solidification step 13. Mixing and granulation were conducted by using a high speed mixer of vertical blade type to form granulation products with a particle size of 5 mm or less. The rotational speed of the blades was set within a range from 1300 to 2500 rpm during mixing and 700 to 800 rpm during granulation. Then, the solidification products obtained by the hydrothermal treatment indicated as the fine artificial aggregates in FIG. 8, are blended without pulverization/classification with the fine aggregates from crushed stone produced by the sand making machine 1 at a weight ratio of fine natural aggregate : fine artificial aggregate = about 20:1, to obtain products of fine aggregates for concrete capable of satisfying the JIS.

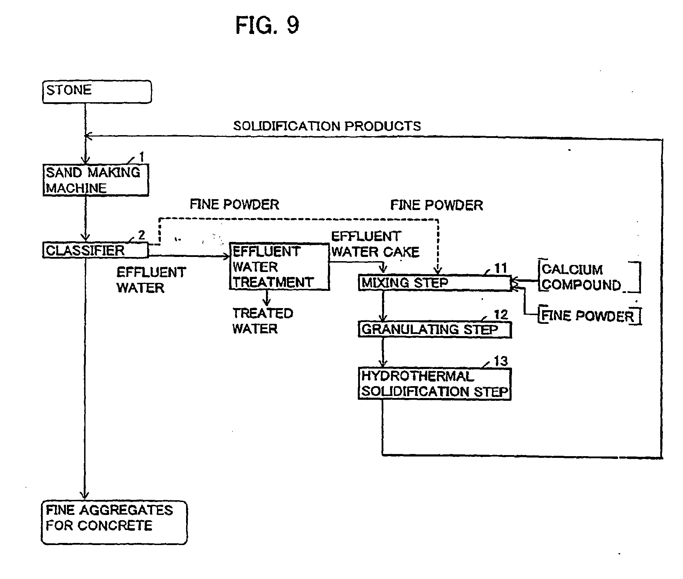

FIG. 9 is a flow chart for explaining an embodiment of the second method of utilizing crushing by-products according to this invention. In this case, constitutions in common with those in the first method of utilizing the crushing by-products carry the same reference numerals as those in either FIG. 7 or FIG. 8, with no particular explanation, and explanation will be made only to the different aspects.

That is, as shown in FIG. 9, granular solidification products with a particle size of about 1 to 10 mm were obtained starting from the effluent water cake or the fine powder by way of a mixing step 11, a granulation step 12 and a hydrothermal solidification step 13. Mixing and pulverization were conducted by using a high speed mixer of vertical blade type to form granulation products with a particle size of about 1 to 10 mm. Then, the solidification products obtained by the hydrothermal treatment were supplied to the sand making machine 1 of the sand making facility and were used as a portion of the fine aggregates for concrete. A fine aggregate products for concrete capable of satisfying the JIS can be obtained by supplying the granular solidification products to the sand making machine 1 at a weight ratio of aggregates from crushed stone: artificial fine aggregates = about 20:1.

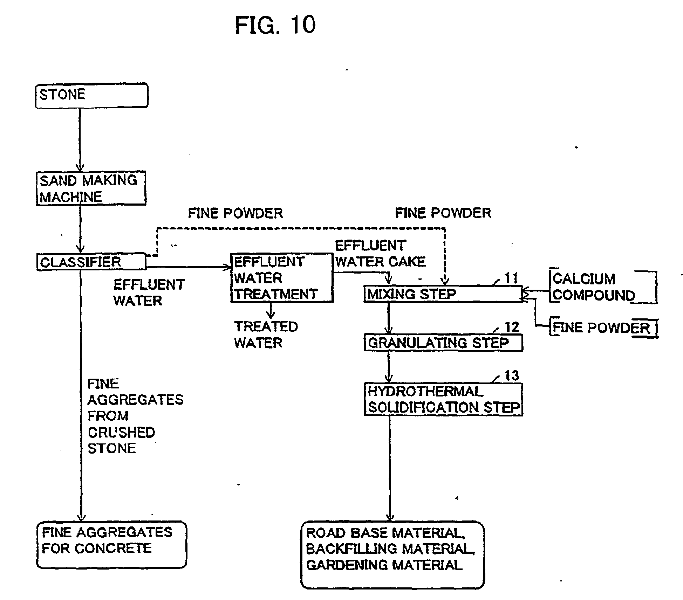

FIG. 10 is a flow chart for explaining an embodiment of the third method of utilizing crushing by-products according to this invention. In this case, constitutions in common with those in the second and third method of utilizing the crushing by-products carry the same reference numerals as those in either FIG. 7 or FIG. 9 with no particular explanation, and explanations will be made only to the different aspects.

As shown in FIG. 10, granular solidification products with a particle size of about 1 to 10 mm were obtained from effluent water cake or the fine powder by way of a mixing step 11, a granulation step 12 and a hydrothermal solidification step 13. Mixing and granulation were practiced by using a high speed mixer of vertical blade type to form granulation products with a particle size of about 1 to 10 mm. The solidification products obtained by the hydrothermal treatment were excellent in the strength and the low water absorption and could be used for the road basic material, backfilling material or gardening material.

A high speed mixer of vessel fixed type is used as the mixer having the composite function for practicing pulverization, mixing and granulation, the high speed mixer of vertical blade type is used for the embodiments shown in FIG. 1 to FIG. 10, however, a high speed mixer of backflow type is preferred.

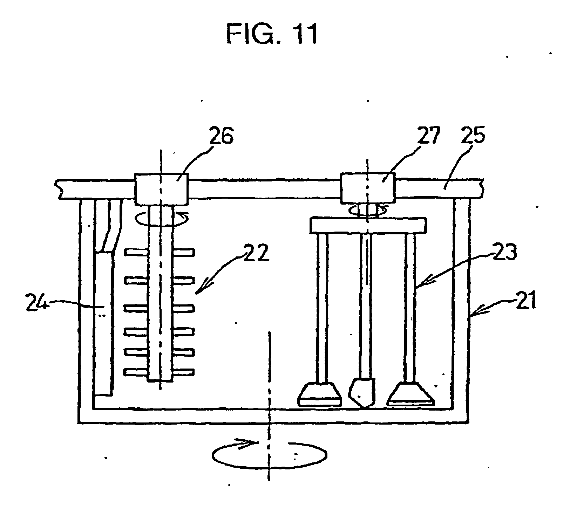

FIG. 11 is a view showing a schematic constitution of a high speed mixer of backflow type. In the figure, 21 denotes a cylindrical vessel that rotates horizontally in a clockwise direction, for example, while containing the raw material (effluent water cake and/or fine powder, calcium compound). The number 22 in the figure denotes the blade (also referred to as an agitator) of which the axis is located in a distance from the center of the cylindrical vessel 21 (left in this figure) and rotates high speed in the counterclockwise direction opposite to the rotational direction of the vessel. Number 23 in FIG. 11 denotes another blade which accelerate the mixing in the vessel. The blade 23 is situated in a distance from the center of the vessel and at a position opposite to the blade 22, and in the counterclockwise opposite to the rotational direction of the vessel 21. Both of 22 and 23 have the rotational axis which are installed at the fixed cover 25 via the bearings 26 and 27, respectively.

The vessel 21, the blades 22 and 23 are driven independently by motors. Number 24 denotes a scraper for scraping off the material (mixture) deposited on the inner circumferential surface of the vessel 21. The bottom portion of the blade 23 also has a function of the scraper so that the material (mixture) is not deposited on the bottom of the vessel 21. The raw material, silica-containing mud sludge, is supplied into the vessel 21 from a raw material supply port which is not illustrated in FIG. 11 located at the fixed cover 25 and, after the treatment, the treated products, mud-like raw material, are discharged from discharge port, which is not illustrated in FIG. 11 located at the bottom of the vessel 21.

The high speed mixer of backflow type having the vessel 21 which rotates in the counterclockwise direction opposite to the direction of blade 22 accelerates pulverization, dispersion and material flow in the vessel 21 making it possible to conduct more preferred uniform mixing compared with the mixer of vessel fixed type. Also for the treatment of effluent water cake of high water content, this type of mixer does not cause the bridging phenomenon (clogged state) because the effluent water cake is not so kneaded in the vessel. Further, also in a case of preparing the mud-like raw material by adding and mixing water to the fine powder and the calcium compound, the high speed mixer of backflow type minimizes the non-mixed portions and realizes uniform mixing. The vessel 21, the high speed blade 22 and blade 23 rotate in different direction and at different speed to each other, which changes the position and the velocity of the mud-like raw material in the vessel 21 resulting excellent effect of mixing. Further, since the mixer has two blades 22 and 23 which are driven independently, the power charged from a driving source to both of the blade 22 and the vessel 21 to the raw material. As a result, the power charged per unit volume of material (kW/litre) can be increased widely and the uniform mixing of the mud-like raw material can be achieved in a short period of time.

The high speed mixer of backflow type is operated such that the blade 22 rotates at a high speed during pulverization and mixing, while at a low speed during granulation. For example, the granulation products (mud-like raw material) with a particle size of about 1 to 10 mm can be produced from the effluent water cake having a water content of 20% with quick lime at 3% by weight to the cake under the following conditions of the high speed mixer of backflow type; rotation speed of blade 22 of 2500 rpm, the rotation speed of the vessel of 45 rpm, and the a treating time of 2 min during mixing, and the rotation speed of blade 22 of 750 rpm, the rotation speed of the vessel of 45 rpm and the treating time of 4 min during granulation.

### EXAMPLE

Examples of this invention will be explained. The invention is not restricted only to the following examples so long as it does not exceed the subject manner thereof.

At first, a mixer A and a mixer B used in examples and comparative examples are to be explained. Both the mixer A and the mixer B were the uniaxis spirally mixer. As is well-known, the uniaxis spiral mixer has such a structure that the vertical shaft of an agitation blade is attached eccentrically on the vessel cover and revolves around the center of the fixed vessel while rotating. That is, the agitating blade rotates and revolves simultaneously to stir the material in the vessel. The mixer A was a high speed mixer having the agitating blade of hook type. The mixer B was a low speed mixer having the agitating blade of beak type.

### [Example 1]

The effluent water cake with 25% water content obtained from the crushing plant was used as a typical example of silica-containing mud sludge. As shown in Table 1, quick lime or cement was added to the effluent water cake by 3 to 10% by weight as calcium and mixed under the conditions shown in Table 2 to obtain the mud-like raw material. Example 1 was performed using the mixer A for pulverization and mixing under the conditions 1, that is, the rotation speed of the agitating blade of 288 rpm, the revolution speed of 135 rpm and the mixing time of 2 min. Thus obtained mud-like raw material was pressed in a mold of 25 mm diameter and 50 mm length, which was applied to the test of uniaxial strength of the hydrothermal solidification products. The hydrothermal treatment was performed in an autoclave under the conditions of a reaction temperature of 180°C with the steam of saturated pressure and a reaction time of 5 hours.

For examining the degree of uniform mixing, a packed specimen was prepared from the mud-like raw material before hydrothermal reaction and the number and the circle-equivalent diameter Di of non-mixed portions were measured on the cross section of the specimen.

The packed specimen for the mud-like raw material was prepared by the method based on the standards of The Soil Engineering Society in which the mud-like raw material before hydrothermal reaction was charged in a mold of 50 mm diameter x 100 mm length and packed with a packing test weight. The specimen was sliced into four parts in the longitudinal direction and the number and the area were measured for each of the non-mixed portions on the cut surface, and the diameter Di was calculated assuming the shape as a circle. For eliminating the effect caused by fluctuation during the compacting of the specimen, the area of both the mixed portions and the non-mixed portions were calculated excluding the area of void observed on the cut surface. A known image analyzer (image processing apparatus) was used for the measurement of the number and the area of the non-mixed.

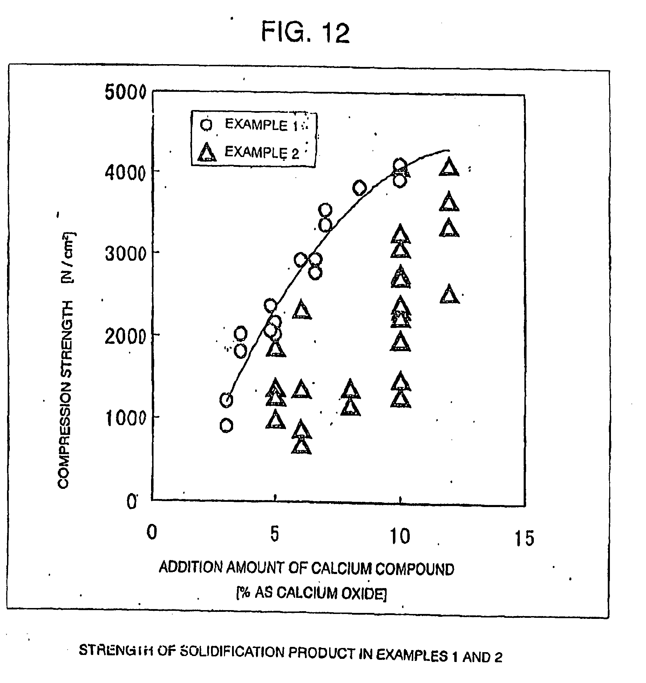

Then, the area of the non-mixed portions were summed up and classified by Di and expressed in percentage of the area of the cut surface, such as A% for the non-mixed portions with Di > 2 mm, B% for 0.5 mm ≦ Di ≦ 2 mm and C% for Di < 0.5 mm, respectively. The measurable lower limit of the diameter Di by the image analyzer used was 0.5 mm. The area and the number of the non-mixed portions were calculated for each of the cut surfaces, then expressed in percentage as above. The distribution of the non-mixed portions of the packed specimen was calculated by averaging the A%, B% and C% for all the cut surfaces. The degree of non-mixing in Table 2 was defined as the total area of non-mixed portions having Di ≦ 0.5 mm. FIG. 12 shows the uniaxial compression strength of thus obtained hydrothermal solidification products as indicated with an open circle.

### [Example 2]

The effluent water cake with 25% water content obtained from the crushing plant was used as a typical example of silica-containing mud sludge. As shown in Table 1, quick lime or cement was added to the effluent water cake by 5 to 12% by weight as calcium and mixed under the conditions 2 shown in Table 2 to obtain the mud-like raw material. Example 2 was performed using the mixer B for pulverization and mixing under the conditions 2, that is, the rotation speed of the agitating blade of 108 rpm, the revolution speed of 66 rpm and the mixing time of 2 min. Thus obtained mud-like raw material was pressed in a mold of 25 mm diameter and 50 mm length, which was applied to the test of uniaxis strength of the hydrothermal solidification products. The hydrothermal treatment was performed in an autoclave under the conditions of a reaction temperature of 180°C with the steam of saturated pressure and a reaction time of 5 hours. Table 2 shows the results of the measurement of Di for the non-mixed portions of the mud-like raw material obtained under the conditions of 2. FIG. 12 shows the uniaxial compression strength of thus obtained hydrothermal solidification products as indicated with an open triangle.

### [Example 3]

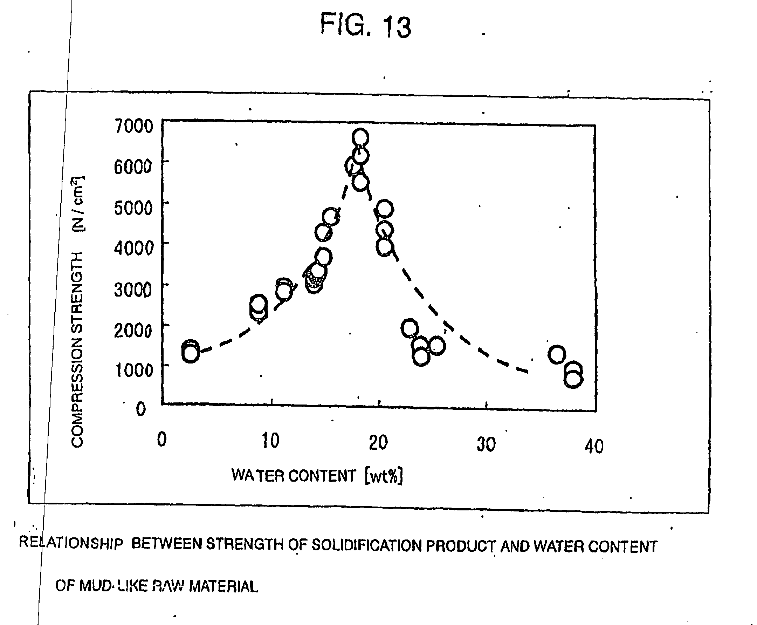

The effluent water cake with water content of 18 to 25% obtained from the crushing plant was used as a typical example of silica-containing mud sludge. The water content of the cake was controlled by drying, mixing with fine powder or, alternatively, adding water. Then, quick lime or cement was added by 10 to 30% by weight as calcium to the cake and then pulverized and mixed using the mixer A. In this case, the agitation blade was operated at a rotation speed of 288 rpm and a revolution speed of 135 rpm and for 2 min of treating time to obtain the mud-like raw material. Then, for confirming the strength of the hydrothermal solidification product obtained from the mud-like raw material was pressed in a mold of 25 mm diameter and 50 mm length and was solidified by hydrothermal reaction in an autoclave at a reaction temperature of 180°C with the steam of saturated pressure for a reaction time of 5 hours. FIG. 13 shows the results of the measurements of the uniaxial strength of thus obtained hydrothermal solidification products.

As can be seen from the results shown in Table 2 and FIG. 12, for the mud-like raw material with less amount of the non-mixed portions with Di > 2 mm gave the hydrothermal solidification products with less fluctuation in the quality and higher compression strength when compared with the results of Example 2 in respect to the same addition amount of calcium.

As shown in FIG. 13, the favorable hydrothermal solidification products were obtained by controlling the water content of the mud-like raw material within a range from 5 to 35% by weight. It should be controlled more preferably within a range from 8 to 25% and, further preferably, from 12 to 21% by weight. Further, when the water content of the mud-like raw material is controlled within a range from 15 to 18% by weight, the resultant hydrothermal solidification products showed the compression strength about 6 times higher than those of the hydrothermal solidification products obtained from the mud-like raw material having the water content either less than 5 % or larger than 35 %.

**Table 1**

| Section | Addition Amount of Quick Lime or Cement (%) | Mixing Conditions |
|---|---|---|
| Example 1 | 3~10 | Conditions 1 |
| Example 2 | 5~12 | Conditions 2 |

**Table 2**

| Section for Mixing Conditions | Mixing Time (min) | | Non-mixed Portion | | | Non- Mixing Degree (%) |
|---|---|---|---|---|---|---|
| | First Step | Second Step | A | B | C | |
| | with Mixer A | with Mixer B | Di<0.5mm (%) | 0.5mm<Di <2mm (%) | Di>2mm (%) | |
| Conditions 1 | 2 | - | 99.8 | 0.2 | 0 | 0.2 |
| Conditions 2 | - | 2 | 64 | 13 | 23 | 36 |

### [Example 4a - Example 4c]

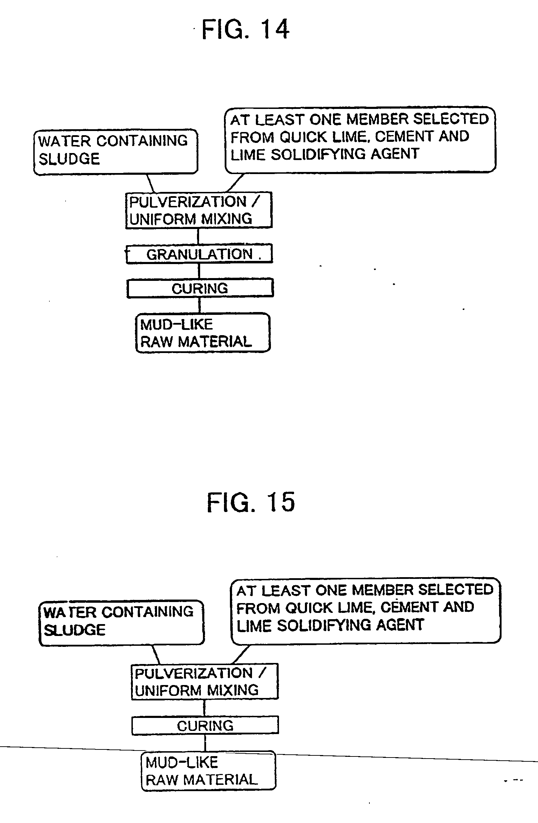

FIG. 14 shows the procedures for Examples 4a, 4b and 4c. The effluent water cake with 25% water content obtained from the crushing plant was used as a typical example of silica-containing mud sludge.

In Example 4a, the effluent water cake was mixed with 3% by weight of quick lime, then pulverized and mixed using the mixer A under the conditions of rotation speed of the agitation blade at 288 rpm and the revolution speed of the shaft at 135 rpm and for 2 min of mixing time. Then, the obtained mixture was granulated using the mixer B under the rotation speed of the agitation blade at 180 rpm and the revolution speed of the shaft at 66 rpm and for 2 min of mixing time. The granulation products were cured and dried at the room temperature for 24 hours to obtain the improved soil.

In Example 4b, the mud-like raw material was produced under the same conditions as those in Example 4a as shown in Table 3.

In Example 4c, the mud-like raw material was produced under the same conditions as those in Example 4a except for increasing the mixing time using the mixer A to 4 min. Procedures in Examples 4a - 4c are shown in FIG. 14.

For examining the degree of uniform mixing of the obtained mud like raw material, the packed specimens of were prepared from the mud-like raw material and the circle-equivalent diameter Di of the non-mixed portions on the cut surface was measured by the method described above.

In order to evaluate the quality of the improved soil, the re-slurrification ratio was measured using thus cured mud-like raw materials.

Measurement of the re-slurrification ratio is to be explained as follows. The mud-like raw material having a particle size of 1 mm to 10 mm was chosen and immersed into water for 3 hours, and then they were filtered through a sieve of 1 mm opening. The re-slurrified mud-like raw material passing the sieve and the mud-like raw material remaining on the sieve were dried and weighed respectively. The re-slurrification ratio was defined as: re-slurrification ratio (%) = 100 x A/(A + B), where A represents the dry weight of the re-slurrified mud-like raw material passing through the sieve and B represents the dry weight of the mud-like raw material remaining on the sieve after drying.

### [Examples 5a - 5c]

FIG. 14 shows the procedures for Examples 5a, 5b and 5c. The effluent water cake of 25% water content was used as the silica-containing mud sludge. Quick lime was added to the effluent water cake by 3 wt% in Example 5a, 6 wt% in Example 5b and 3 wt% in Example 5c, and then pulverized, mixed and granulated using the mixer B. The rotation speed of the agitation blade of the mixer B was 180 rpm and the revolution speed of the shaft was 66 rpm in each of the Examples 5a to 5c, and the mixing time was 2 min in Examples 5a and 5b and 4 min in Example 5c. The curing time was set to 24 hours in each of Examples 5a - 5c. Table 3 shows the results of measurement of the diameter Di for the non-mixed portions and the results of measurement for the re-slurrification ratio of the mud-like raw material using the particles with size ranging from 1 to 10 mm chosen from the cured mud-like raw material.

### [Examples 6a - 6b]

FIG. 14 shows the procedures for Examples 6a and 6b. The effluent water cake of 25% water content was used as the silica-containing mud sludge. Cement was added by 10% by weight to the effluent water cake in Example 6a and pulverized and mixed using the mixer A under the conditions of rotation speed of the agitation blade at 288 rpm and the revolution speed of the shaft at 135 rpm and mixing time of 4 min. Then, the resultant mixture was granulated using the mixer B under the conditions of rotational speed of the agitation blade at 108 rpm and the revolution speed of the shaft at 66 rpm and mixing time of 4 min. The granulation products were cured for 4 days. Further, in Example 6b, the mud-like raw material was produced under the same conditions as those in Example 6a while changing the addition amount of cement to 20% by weight. Table 3 shows the results of measurement for the diameter Di for the non-mixed portions and the results of measurement for the re-slurrification ratio of the mud-like raw material using the particles with size ranging from 1 to 10 mm chosen from the cured mud-like raw material.

### [Examples 7a, 7b]

FIG. 14 shows the procedures for Examples 7a and 7b. The effluent water cake of 25% water content was used as the silica-containing mud sludge. Cement was added to the cake by 10 wt% in Example 7a, 20 wt% in Example 7b and pulverized, mixed and granulated using the mixer B. The rotation speed of the agitation blade of the mixer B was 108 rpm and the revolution speed of the shaft was 66 rpm, and the mixing time was 4 min. The products were cured for 4 days both in Examples 7a and 7b. Table 3 shows the results of measurement for the diameter Di for the non-mixed portions and the results of measurement of the re-slurrification ratio of the mud-like raw material using the particles with size ranging from 1 to 10 mm among the cured mud-like raw material.

As is shown apparently from Table 3, the re-slurrification ratio was 5% or less in Example 4 and Example 6 which are obviously smaller than those in Example 5 and Example 7, respectively. It has been found that they can be utilized suitably as load base material and reclaiming material.

**Table 3**

| Section | Subnumber | Mixing Time (min) | | Quick Lime Addition Amount (wt%) | Cement Addition Amount (wt%) | Non-mixed Portion | | | Reslurrification Ratio (%) |
|---|---|---|---|---|---|---|---|---|---|
| | | First Stage | Second Stage | | | A | B | C | |
| | | with Mixer A | with Mixer B | | | Di<0.5mm (%) | 0.5mm<Di <2mm (%) | Di>2mm (%) | |
| Example 4 | a | 2 | 2 | 3 | - | 99.8 | 0.2 | 0 | 1.8 |
| | b | 2 | 2 | 3 | - | 99.8 | 0.1 | 0 | 0.3 |
| | c | 4 | 2 | 3 | - | 99.8 | 0.2 | 0 | 1.6 |
| Example 5 | a | 2 | | 3 | - | 63.9 | 13.2 | 22.9 | 42.0 |
| | b | 2 | | 6 | - | 63 | 14.7 | 22.3 | 67.2 |
| | c | 4 | | 3 | - | 81.3 | 8.0 | 10.7 | 21.0 |
| Example 6 | a | 4 | 2 | - | 10 | 99.8 | 0.2 | 0 | 0.3 |
| | b | 4 | 2 | - | 20 | 99.8 | 0.2 | 0 | 4.9 |
| Example 7 | a | 4 | | - | 10 | 81.1 | 10.8 | 8.1 | 25.4 |
| | b | 4 | | - | 20 | 86 | 9.0 | 6.0 | 33.3 |

### [Example 8]

FIG. 15 shows the procedures for Examples 8. The effluent water cake of 25% water content was used as the silica-containing mud sludge. Quick lime was added by 3% by weight to the cake and pulverized and mixed using the mixer A under the condition of rotation speed of the agitation blade at 288 rpm and revolution speed of the shaft at 135 rpm and a mixing time of 2 min. Then, the resultant mixture was classified by a sieve, and the treated material of a particle size ranging about from 1 to 5 mm was cured for 24 hours. Table 4 shows the results of measurement of the diameter Di for the non-mixed portions and the results of measurement of the re-slurrification ratio of the cured mud-like raw material. FIG. 15 shows procedures in Example 8.

### [Example 9]

FIG. 15 shows the procedures for Examples 9. In Example 9, the mud-like raw material was produced under the same conditions as those in Example 8, except for the mixing time, that is, 30 sec using the mixer A. Table 4 shows the results of measurement of the diameter Di of the non-mixed portions and the results of measurement of the re-slurrification rate of the mud-like raw material of a particle size ranging from 1 to 10 mm chosen from the cured mud-like raw materials.

**Table 4**

| Section | Mixing Time with Mixer A (min) | Quick Lime Addition Amount (wt%) | Non-mixed Portion | | | Reslurrification Ratio (%) |
|---|---|---|---|---|---|---|
| | | | A | B | C | |
| | | | Di<0.5mm (%) | 0.5mm<Di <2mm (%) | Di>2mm (%) | |
| Example 8 | 2 | 3 | 99.9 | 0.1 | 0 | 0.3 |
| Example 9 | 0.5 | 3 | 75.6 | 10.1 | 14.3 | 47.7 |

It is clear from Table 4 that even if the high speed mixer A was used, the uniform mixing was not attained by short time of mixing resulting in the re-slurrification ratio as high as 50% in Example 9. On the other hand, if the mixing conditions are determined so as to reduce the circular-equivalent diameter Di of the non-mixed portion to 2 mm or less, the mud-like raw material with small re-slurrification ratio was obtained in Example 8.

### [Example 10]

FIG. 15 shows the procedures for Examples 10. In Example 10, the mud-like raw material was produced under the same conditions as those in Example 8 except for changing the curing time to 3 hours and 24 hours. Table 5 shows the results of measurement of the diameter Di of the non-mixed portions and the results of measurement of the re-slurrification ratio of the each mud-like raw material with the particle size ranging from 1 to 5 mm and cured for 3 hours and 24 hours.

### [Example 11]

FIG. 15 shows the procedures for Examples 11. In Example 11, the mud-like raw material was produced under the same conditions as those in Example 9 except for changing the curing time to 3 hours and 24 hours. Table 5 shows the results of measurement of the diameter Di for the non mixed portion and the results of measurement of the re-slurrification ratio of the each mud-like raw material with a particle size ranging from 1 to 5 mm and cured for 3 hours and 24 hours.

It is clear from Table 5 that even if the high speed mixer A was used, the uniform mixing was not attained by short time of mixing resulting in high re-slurrification ratio as high as 50% in Example 9. On the other hand, if the mixing conditions are determined so as to reduce non-mixed portions, the favorable results were obtained in Example 10 with the degree of uniform mixing mud-like raw material and the slurrification ratio of 5.8% after 3 hours' curing time and 4.4% after 24 hours' curing time.

**Table 5**

| Section | Mixing Time with Mixer A (min) | Cement Addition Amount (wt%) | Non-mixed Portion | | | Slurrification Ratio after 3 Hours' Curing (%) | Slurrification Ratio after 24 Hours' Curing (%) |
|---|---|---|---|---|---|---|---|
| | | | A | B | C | | |
| | | | Di<0.6mm (%) | 0.5mm<Di <2mm (%) | Di>2mm (%) | | |
| Example 10 | 2 | 3 | 99.9 | 0.1 | 0 | 5.8 | 4.4 |
| Example 11 | 0.5 | 3 | 80.2 | 8.9 | 10.9 | 49.5 | 47.8 |

### [Example 12]

FIG. 15 shows the procedures for Examples 12. The relationship between the non-mixed ratio and the re-slurrification ratio was examined. The effluent water cake of 25% water content was used as the silica-containing mud sludge. The cake was mixed with 3% by weight of quick lime and 3% by weight of triiron tetraoxide (Fe₃O₄) as a coloring agent and pulverized and mixed by using the mixer A. The operation conditions for the mixer A were the rotation speed of the agitation blade at 280 rpm and revolution speed of the shaft at 135 rpm and mixing time of 30 sec, 1 min, 2 min and 4 min.

The mud-like raw material with a particle size from 1 to 5 mm was chosen from thus obtained mixture. They were cured for 24 hours to be used for measurement of the re-slurrification ratio.

On the other hand, for examining the non-mixed ratio, packed specimens of mud-like raw material were prepared by using the above mixtures produced @@@ the different mixing time as above and their non-mixed ratio was measured. The coloring agent was used for distinguishing the void portions and the non-mixed portions from the uniformly mixed portions by the color. The color distribution was recognized by the image analyzer described above to measure the non-mixed ratio.

The preparation of the packed specimen of the mud-like raw material described above was based on the standards of The Soil Engineering Society, in which the specimen was charged in a mold of 50 mm diameter and 100 mm length and packed by a packing test weight. The specimen was sliced into four parts in the longitudinal direction. Thus obtained three cut surfaces at different sliced positions were analyzed to calculate the cross sectional area Sa excluding void portions and the total area Sb for each of the non-mixed portions, of which the circle-equivalent diameter Di is 0.5 mm or more, in the cross sectional area Sa excluding the void portions. The ratio (Sb/Sa) was calculated for the diameter range of Di > 2 mm, 0.5 mm ≦ Di ≦ 2 mm and Di < 0.5 of the non-mixed portions. The ratio was calculated for three cut surfaces in the same manner. These ratio obtained from three cut surfaces were averaged to be regarded as the ratio of the specimen tested. On the other hand, the summation of the ratio Sb/Sa for the range of 0.5 mm ≦ Di ≦ 2 mm and Di > 2 mm were regarded as non-mixed ratio.

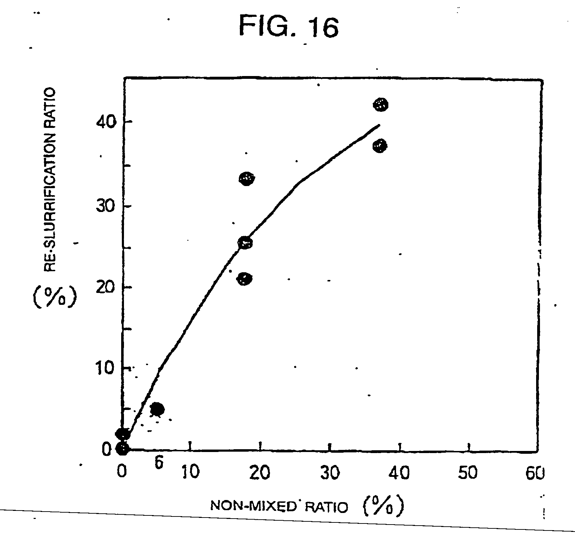

FIG. 16 shows the relationship between the non-mixed ratio obtained by the test described above and the re-slurrification ratio. As shown in this figure, the non-mixed ratio and the re-slurrification ratio have a good correlationship and the mud-like raw material with the re-slurrification ratio of 10% or less can be obtained by decreasing the non-mixed ratio to about 6% or less by uniform mixing and, further, a mud-like raw material with the re-slurrification ratio of 5% or less can be obtained by decreasing non-mixed ratio to about 3% or less by uniform mixing,

As has been described above according to the method of this invention concerning the treatment of the silica-containing mud sludge, mud cake and mud sludge containing silica as sludge resulting from construction, effluent water cake resulting from treatment of dredged mud, effluent water cake resulting from crushing plants (including gravel plants) and fine powder resulting from the crushing plant can be treated to obtain solidification products of excellent strength and low absorption of water, which can be utilized, for example, as fine aggregates for concrete and road base material which are used in wide applications and in great demand, as well as the volume of wastes can be reduced effectively.

Solidification products of excellent strength and low water absorption are obtained by treatment of mud cake (silica-containing mud sludge) such as the sludge resulting from construction, the effluent water cake resulting from treatment of dredged mud, the effluent water cake resulting from crushing plants (including gravel plants) and the fine powder resulting from the crushing plant, by a method comprising a mixing step of mixing the calcium compound with the silica-containing mud sludge to obtain the mud-like raw material, a granulation step of granulating the mud-like raw material to obtain the granulation products and a hydrothermal solidification step of solidifying the granulation product by a hydrothermal treatment, the products being used in wide application and in great demand.

## Claims

1. A method of treatment of silica-containing mud sludge, comprising:
a mixing step of mixing a calcium compound with the silica-containing mud sludge to form an uniform mud-like raw material having a non-mixed ratio of 6% or less, wherein the non-mixed ratio is defined as a ratio of the total area of a non-mixed portions relative to the total cross sectional area excluding void portions on the cross section of a packed specimen of the mud-like raw material, and
a hydrothermal solidification step of solidifying the mud-like raw material by a hydrothermal treatment to obtain a solidification product.

2. A method of treatment of silica-containing mud sludge comprising:
a mixing step of mixing a calcium compound with the silica-containing mud sludge to form an uniform mud-like raw material having a non-mixed ratio of 6% or less, wherein the non-mixed ratio is defined as a ratio of the total area of a non-mixed portions relative to the total cross sectional area excluding void portions on the cross section of a packed specimen of the mud-like raw material;
a granulation step of granulating the mud-like raw material to obtain a granulation product, and
a hydrothermal solidification step of solidifying the granulation product by a hydrothermal treatment to obtain a solidification product.

3. The method of treatment of silica-containing mud sludge of claim 1 or 2, wherein
the mixing step also includes a water content controlling step in order to adjust the mud-like raw material to a water content of 5 to 35 wt%.

4. The method of treatment of silica-containing mud sludge of claims 1 to 3, wherein
a high speed mixer of backflow type with a rotation speed from 1250 to 3000 rpm is used as the mixer in the mixing step.

5. The method of treatment of silica-containing mud sludge of claim 1 or 2, wherein
the silica-containing mud sludge to be treated is selected from the group consisting of an effluent water cake resulting from a crushing plant, a fine powder formed from a crushing plant, a mud sludge resulting from construction and an effluent water cake resulting from treatment of dredged mud.

6. The method of treatment of silica-containing mud sludge of claim 2, wherein
the water content controlling step is selected from the group consisting of a dewatering step using a dewatering equipment, a drying step using a drier, a water adsorption step using a fine powder mixing equipment, a sun drying step of controlling the water content by sun drying and a water addition step of controlling the water content by addition of water.

7. The method of treatment of silica-containing mud sludge of claim 6, wherein
the drying step conducts drying by using a heat generated from the hydrothermal solidification step.

8. A mud-like raw material in which a silica-containing mud sludge and a calcium compound are mixed uniformly wherein a circle equivalent diameter for each of a non-mixed portion is 2 mm or less on the cross section of a packed specimen of the mud-like raw material.

## Patentansprüche

1. Verfahren zur Behandlung einer siliziumoxidhaltigen Schlammtrübe, umfassend:
einen Mischschritt des Vermischens einer Calciumverbindung mit der siliziumoxidhaltigen Schlammtrübe, um ein gleichförmiges, trübes Rohmaterial mit einem unvermischten Anteil von 6% oder weniger zu erzeugen, wobei der unvermischte Anteil als ein Anteil der Gesamtfläche von unvermischten Bereichen relativ zu der gesamten Querschnittsfläche, ausschließlich Lücken auf dem Querschnitt einer gepackten Probe des trüben Rohmaterials, definiert ist, und
einen hydrothermischen Verfestigungsschritt der Verfestigung des trüben Rohmaterials mittels einer hydrothermischen Behandlung, um ein verfestigtes Produkt zu erhalten.

2. Verfahren zur Behandlung einer siliziumoxidhaltigen Schlammtrübe, umfassend:
einen Mischschritt des Vermischens einer Calciumverbindung mit der siliziumoxidhaltigen Schlammtrübe, um ein gleichförmiges, trübes Rohmaterial mit einem unvermischten Anteil von 6% oder weniger zu erzeugen, wobei der unvermischte Anteil als ein Anteil der Gesamtfläche von unvermischten Bereichen relativ zu der gesamten Querschnittsfläche, ausschließlich Lücken auf dem Querschnitt einer gepackten Probe des trüben Rohmaterials, definiert ist;
einen Granulierschritt der Granulierung des schlammartigen Rohmaterials, um ein Granulationsprodukt zu erhalten, und
einen hydrothermischen Verfestigungsschritt der Verfestigung des Granulationsprodukts mittels einer hydrothermischen Behandlung, um ein verfestigtes Produkt zu erhalten.

3. Das Verfahren zur Behandlung einer siliziumoxidhaltigen Schlammtrübe gemäß Anspruch 1 oder 2, worin der Mischschritt ebenso einen Steuerungsschritt des Wassergehalts mit umfasst, um das trübe Rohmaterial auf einen Wassergehalt von 5 bis 35 Gew.-% einzustellen.

4. Das Verfahren zur Behandlung einer siliziumoxidhaltigen Schlammtrübe gemäß der Ansprüche 1 bis 3, worin
ein Hochgeschwindigkeitsmischer vom Rückflusstyp mit einer Rotationsgeschwindigkeit von 1250 bis 3000 U/min als der Mischer in dem Mischschritt eingesetzt wird.

5. Das Verfahren zur Behandlung einer siliziumoxidhaltigen Schlammtrübe gemäß Anspruch 1 oder 2, worin
die zu behandelnde siliziumoxidhaltige Schlammtrübe aus der Gruppe ausgewählt ist, die aus einem Filterkuchen aus Abwasser, das aus einer Zerkleinerungsanlage stammt; Feinpulver, das aus einer Zerkleinerungsanlage stammt; einer Schlammtrübe vom Baugewerbe und einem Filterkuchen aus Abwasser aus einer Behandlung einer ausgebaggerten Trübe besteht.

6. Das Verfahren zur Behandlung einer siliziumoxidhaltigen Schlammtrübe gemäß Anspruch 2, worin
der Steuerungsschritt des Wassergehalts aus der Gruppe ausgewählt ist, die aus einem Entwässerungsschritt unter Verwendung einer Entwässerungseinrichtung, einem Trocknungsschritt unter Verwendung eines Trockners, einem Wasseradsorptionsschritt unter Verwendung einer Feinpulvermischvorrichtung, einem Sonnentrocknungsschritt durch Steuerung des Wassergehaltes mittels Sonnentrocknung und einem Wasserzugabeschritt durch Steuerung des Wassergehaltes durch Zugabe von Wasser besteht.

7. Das Verfahren zur Behandlung einer siliziumoxidhaltigen Schlammtrübe gemäß Anspruch 6, wobei
der Trocknungsschritt das Trocknen unter Verwendung von in dem hydrothermischen Verfestigungsschritt erzeugter Hitze betrieben wird.

8. Ein trübes Rohmaterial, in welchem eine siliziumoxidhaltige Schlammtrübe und eine Calciumverbindung gleichförmig vermischt werden, wobei der kreisäquivalente Durchmesser für jeweils einen unvermischten Bereich auf dem Querschnitt einer gepackten Probe des trüben Rohmaterials 2 mm oder kleiner ist.

## Revendications

1. Procédé de traitement de boues contenant de la silice comprenant :
une étape de mélange permettant de mélanger un composé de type calcium avec les boues contenant de la silice pour former une matière première uniforme semblable à de la boue ayant un rapport des portions non mélangées de 6 % ou moins, dans lequel le rapport des portions non mélangées est défini comme un rapport de la surface totale des portions non mélangées par rapport à la surface transversale totale excluant les portions de vide sur la section transversale d'un échantillon conditionné de la matière première semblable de la boue, et
une étape de solidification hydrothermique permettant de solidifier la matière première semblable à de la boue par un procédé hydrothermique pour obtenir un produit de solidification.

2. Procédé de traitement de boues contenant de la silice comprenant :
une étape de mélange permettant de mélanger un composé de type calcium avec les boues contenant de la silice pour former une matière première uniforme semblable à de la boue ayant un rapport des portions non mélangées de 6% ou moins, dans lequel le rapport des portions non mélangées est défini comme un rapport de la surface totale des portions non mélangées par rapport à la surface transversale totale excluant les portions de vide sur la section transversale d'un échantillon conditionné de la matière première semblable à de la boue ;
une étape de granulation permettant d'effectuer la granulation de la matière première semblable à de la boue pour obtenir un produit granulé, et
une étape de solidification hydrothermique permettant de solidifier le produit granulé par un traitement hydrothermique pour obtenir un produit de solidification.

3. Procédé de traitement de boues contenant de la silice selon la revendication 1 ou 2, dans lequel
l'étape de mélange inclut également une étape de régulation de la teneur en eau afin d'ajuster la matière première semblable à de la boue à une teneur en eau de 5 à 35 % en pds.

4. Procédé de traitement de boues contenant de la silice selon les revendications 1 à 3, dans lequel
un mélangeur à haute vitesse d'un type à reflux avec une vitesse de rotation de 1 250 à 3 000 tr/min est utilisé comme mélangeur dans l'étape de mélange.

5. Procédé de traitement de boues contenant de la silice selon la revendication 1 ou 2, dans lequel
les boues contenant de la silice à traiter sont choisies parmi le groupe constitué d'un tourteau d'effluents résultant d'une installation de concassage, d'une fine poudre formée à partir d'une installation de concassage, de boues résultant de travaux de construction et d'un tourteau d'effluents aqueux résultant du traitement de boues de dragage.

6. Procédé de traitement de boues contenant de la silice selon la revendication 2, dans lequel
l'étape de régulation de la teneur en eau est choisie parmi le groupe constitué d'une étape de déshydratation utilisant un équipement de déshydratation, d'une étape de séchage utilisant un sécheur, une étape d'adsorption utilisant un équipement de mélange de poudre fine, une étape de séchage solaire de régulation de la teneur en eau par le séchage solaire et une étape d'addition d'eau de régulation de la teneur en eau par l'addition d'eau.

7. Procédé de traitement de boues contenant de la silice selon la revendication 6, dans lequel
l'étape de séchage conduit le séchage en utilisant une chaleur produite à partir de l'étape de solidification hydrothermique.

8. Matière première semblable à de la boue dans laquelle des boues contenant de la silice et un composé de type calcium sont mélangés uniformément dans laquelle un diamètre circulaire équivalent pour chaque portion non mélangée est de 2 mm ou moins sur la section transversale d'un échantillon conditionné de la matière première semblable à de la boue.
